# EUROPÄISCHE PATENTSCHRIFT

(11) **EP 2 525 641 B1**
(45) Veröffentlichungstag und Bekanntmachung des Hinweises auf die Patenterteilung: **21.09.2016**
(21) Anmeldenummer: 11700656.9
(22) Anmeldetag: 18.01.2011
(51) Int. Cl.: A01C 1/02

(54) **VERFAHREN ZUR BEURTEILUNG VON KEIMUNGSEIGENSCHAFTEN VON PFLANZENSAMEN**
METHOD FOR EVALUATING GERMINATION PROPERTIES OF PLANT SEEDS
PROCÉDÉ POUR ÉVALUER LES PROPRIÉTÉS DE GERMINATION DE SEMENCES DE PLANTES

(30) Priorität: 21.01.2010 DE 102010001111
(43) Veröffentlichungstag der Anmeldung: 28.11.2012
(73) Patentinhaber: Strube GmbH & Co. KG, 38387 Söllingen (DE)
(72) Erfinder: WOLFF, Antje, 23669 Timmendorfer Strand (DE)
(74) Vertreter: m patent group
(86) Internationale Anmeldenummer: PCT/EP2011/050567
(87) Internationale Veröffentlichungsnummer: WO 2011/089102

(56) Entgegenhaltungen:
- WO-A1-2009/128998
- MAISL Michael, KASPERL Stefan, WOLFF Antje: "Process Monitoring using Three Dimensional Computed Tomography and Automatic Image Processing", ECNDT 2006 Proceedings , 27. September 2006 (2006-09-27), XP002636101, Gefunden im Internet: URL:http://www.ndt.net/article/ecndt2006/d oc/We.3.7.1.pdf [gefunden am 2011-05-06]
- JENNESON P M ET AL: "Optimisation of X-ray micro-tomography for the in situ study of the development of plant roots", NUCLEAR SCIENCE SYMPOSIUM, 1999. CONFERENCE RECORD. 1999 IEEE 24-30 OCTOBER 1999, PISCATAWAY, NJ, USA,IEEE, US, vol. 1, 24 October 1999 (1999-10-24), pages 429-432, XP010500160, DOI: 10.1109/NSSMIC.1999.842521 ISBN: 978-0-7803-5696-2

## Beschreibung

Die vorliegende Erfindung betrifft ein Verfahren zur automatisierten, objektiven Beurteilung von Keimungseigenschaften von Pflanzensamen und von sich aus den Pflanzensamen entwickelnden Keimlingen, bei dem sich die Pflanzensamen und Keimlinge in einem dichten Medium als Keimungssubstrat, insbesondere Filterpapier oder Erde, befinden, auf Grundlage zeitpunktbezogener anatomischer Merkmale.

### Stand der Technik

Wenngleich nachfolgend vor allem auf Zuckerrübensaatgut Bezug genommen wird, ist die Erfindung nicht hierauf beschränkt, sondern prinzipiell bei allen landwirtschaftlich oder wissenschaftlich relevanten Pflanzen anwendbar.

Saatgut muss, auch um gesetzlichen Anforderungen bei der Saatgutprüfung zu genügen, bestimmte Mindestqualitätsmerkmale besitzen, um einen hinreichenden Aufgang und Aufwuchs im Feld zu gewährleisten. Die Qualität des Saatguts ist mitentscheidend, dass sich die jeweiligen genotypischen Ertrags- und Qualitätsmerkmale ausbilden können.

Ziel der Saatgutforschung ist unter anderem die bestmögliche Sicherung eines frühen, hohen und einheitlichen Aufgangs, einer hohen Aufgangsgeschwindigkeit, einer guten Wuchsleistung und einer hohen Stresstoleranz. Hierdurch soll unter anderem eine möglichst große Einheitlichkeit des Aufwuchses, d.h. der sich entwickelnden Pflanzen und der Pflanzen bei Erntereife, sowie ein quantitativ und qualitativ hoher und einheitlicher Ertrag erzielt werden.

Im Vermehrungsanbau, der zur Gewinnung von Saatgut dient, wird der Einfluss von Anbaumaßnahmen auf die Saatguteigenschaften untersucht und kontrolliert. Auf dieser Grundlage werden neue, abgestimmte Produktionsverfahren entwickelt, um Erträge und Qualität der Saatgutrohware zu steigern und zu stabilisieren.

Ein Qualitätsmerkmal von Saatgut ist dessen Mindestkeimfähigkeit. Die Bestimmung wird im Allgemeinen nach Vorgaben der International Seed Testing Association (ISTA) durchgeführt.

Die Samen werden hierbei in angefeuchtetem Filterpapier definierter Qualität unter kontrollierten Feuchtigkeits- und Temperaturbedingungen über einen bestimmten Zeitraum gekeimt. Nach diesem Zeitraum erfolgt ein manuelles Auszählen der gekeimten Samen.

Es ist bekannt, dass bestimmte morphologische, anatomische und physiologische Saatguteigenschaften entscheidenden Einfluss auf das Keim- und Feldaufgangsverhalten haben.

Um weitere Informationen über die Qualität von beispielsweise Zuckerrübensaatgut zu erhalten, ist eine Reihe unterschiedlicher Testverfahren bekannt, durch die sich beispielsweise das Aufgangspotential unter Feldbedingungen abschätzen lässt. Eine Übersicht hierzu gibt H. P. Draycott (Hrsg.): "Sugar beet", World Agriculture Series, Blackwell Publishing, 2006.

MAISL Michael, KASPERL Stefan, WOLFF Antje: "Process Monitoring using Three Dimensional Computed Tomography and Automatic Image Processing", ECNDT 2006 Proceedings, 27. September 2006, stellen ein Verfahren zur computertomographischen dreidimensionalen Abbildung von Zuckerrübensaatgut vor. Die Untersuchung des Saatguts findet zunächst nach Wareneingang statt, ein weiteres Mal nach dem Polieren des Saatguts und ein drittes Mal nach Siebung des Saatguts. Keimende Samen oder Keimlinge werden nicht untersucht. Ebensowenig erfolgt eine Untersuchung während des Keimungsverlaufs. Die Samen werden in einer Probenhalterscheibe jeweils in Ausnehmungen in dieser Scheibe vereinzelt, wobei die Probenhalterscheiben anschließend gestapelt werden. Die Probenhalterscheiben dienen folglich lediglich zum Haltern und Stapeln der einzelnen Samen. Es findet folglich keine Untersuchung von keimenden Pflanzensamen und Keimlingen in einem dichten Medium als Keimungssubstrat statt.

Bekannte Verfahren zur Bestimmung von Keimungseigenschaften haben häufig den Nachteil, dass der Beurteilung nicht oder kaum objektivierbare Entscheidungskriterien zugrunde gelegt werden. Darüber hinaus können herkömmlichen Verfahren nur in geringem Umfang Informationen entnommen werden, die eine prospektive Beurteilung von Saatgut, d.h. eine Vorhersage zu dessen Keimverhalten und insbesondere der Triebkraft im Feld erlauben. Saatgut hoher Keimfähigkeit besitzt nicht notwendigerweise auch eine hohe Triebkraft. Damit erlaubt die Keimfähigkeit alleine keine Aussage beispielsweise zur Stresstoleranz der sich entwickelnden Pflanzen.

Herkömmliche Verfahren sind zudem häufig arbeitsaufwändig und erfordern hohen Personaleinsatz. Da es sich um im wesentlichen manuelle Tests handelt, sind bestimmte Parameter von der individuellen Beurteilung durch das Testpersonal abhängig und damit schwer standardisierbar. Eine weitere Einschränkung hinsichtlich der Standardisierbarkeit ergibt sich aus nicht immer einheitlich verfügbaren Testmedien wie beispielsweise zur Vergleichbarkeit von Untersuchungen erforderlichen (Standard-) Erden.

Die entsprechenden Tests erfolgen zudem in der Regel unter bestimmten, definierten Laborbedingungen, bei denen jeweils nur ein bestimmter Parameter (Feuchtigkeit, Bodenbedeckung etc.) untersucht wird. Rückschlüsse auf das Feldverhalten sind daher schwierig.

Es besteht daher der Bedarf nach automatisierten, vorzugsweise vollautomatischen, objektiven Prüfungsverfahren zur Beurteilung der Keimfähigkeit und Keimqualität von Saatgut.

### Offenbarung der Erfindung

Vor diesem Hintergrund schlägt die vorliegende Erfindung ein Verfahren mit den Merkmalen des Anspruchs 1 vor. Vorteilhafte Ausgestaltungen sind in den abhängigen Ansprüchen und der nachfolgenden Beschreibung angegeben.

### Vorteile der Erfindung

Die vorliegende Erfindung erlaubt es, die Entwicklung vom Samen bis zur Pflanze ober- und unterirdisch unter Einbeziehung von Blättern und Wurzeln (Rüben) zerstörungsfrei qualitativ zu dokumentieren. Hierzu werden beispielsweise zunächst Samen in einem dichten Medium durch das bildgebende Computertomographieverfahren untersucht und anschließend zur weiteren Kultivierung in einen Keimraum verschoben. In zeitlich gestaffelter Abfolge werden während des Keimungsverlaufs erneut Untersuchungen vorgenommen. Durch den weitgehend automatisierten Ablauf des Verfahrens können beliebige Untersuchungsintervalle realisiert werden, die nicht mehr von der Verfügbarkeit von Personal abhängig sind.

Erfindungsgemäß erfolgen die Untersuchungen, während sich die Samen in einem Keimungssubstrat befinden. Als Keimungssubstrat können die herkömmlicherweise in Keimungstests eingesetzten Faltenfilter benutzt werden, jedoch eignet sich das vorgestellte Verfahren auch zur Untersuchung der Einkeimung in anderen Medien, wie z.B. in Erde.

Mittels des vorgestellten Verfahrens werden Pflanzensamen und sich hieraus entwickelnde Keimlinge unter Verwendung wenigstens eines bildgebenden computertomographischen Verfahrens und unter Erhalt zeitpunktbezogener Untersuchungsdaten in zeitlich gestaffelter Abfolge während des Keimungsverlaufs untersucht.

Die gewonnenen zeitpunktbezogenen Untersuchungsdaten werden dann in Form von 3D-Bilddaten jeweils einem Bildverarbeitungsverfahren bzw. -algorithmus unterworfen. Im Rahmen dieser Bildbearbeitungsverfahren werden die jeweils abgebildeten Samen und die sich entwickelnden Keimpflanzen zunächst von dem Keimungssubstrat, beispielsweise von einem Faltenfilter oder von Erde, segmentiert.

Unter dem Begriff "Segmentierung" sei im Rahmen dieser Anmeldung eine Zuordnung von Bildbereichen bzw. Bereichen von Untersuchungsdaten zu Bereichen eines untersuchten Objekts verstanden, die insbesondere unter Verwendung rechnergestützter Bildverarbeitungstechniken erfolgt.

Neben der Segmentierung von abgebildeten Samen bzw. Keimpflanzen einerseits und dem Keimungssubstrat andererseits erfolgt zudem eine Segmentierung und Zuordnung von Bildsegmenten zu anatomischen Einheiten der Pflanzensamen oder Keimlinge.

Aus den entsprechend zugeordneten anatomischen Einheiten, bzw. den hierzu korrespondierenden Bildbereichen werden auf den jeweiligen Untersuchungszeitpunkt bezogene Merkmale dieser anatomischen Einheiten abgeleitet. Die Ableitung der Eigenschaften kann vorteilhafterweise durch eine Algorithmik erfolgen, mittels derer Bildbereiche dreidimensional vermessen werden können.

Die Beurteilung der Keimungseigenschaften der Pflanzensamen erfolgt nun aufgrund der hierdurch erhaltenen zeitpunktbezogenen anatomischen Merkmale.

Unter "Keimungseigenschaften" sei dabei neben dem bloßen Mindestkeimverhalten auch insbesondere die Qualität des Aufgangs, die Aufgangsgeschwindigkeit, die Wuchsleistung, die Stresstoleranz, die Aufwuchseinheitlichkeit, die Keimlingsqualität, wie Länge und/oder Volumen von Sproß und Wurzel, deren Entwicklungsgeschwindigkeit sowie deren Substanzeigenschaften und evtl. noch hieraus abgeleitete Eigenschaften verstanden. Bei einer Keimungseigenschaft kann es sich also auch um eine Eigenschaft eines aus dem Pflanzensamen durch die Keimung hervorgegangenen Keimlings (beispielsweise um die Größe von Keimblättern und die Größe, die Länge und die Substanzeigenschaften von Wurzeln) und insbesondere um die zeitliche Entwicklung dieser Eigenschaft handeln. Ferner sind aber ebenso Eigenschaften von Samen hiervon umfasst, die diesen aufgrund eines erfindungsgemäßen Verfahrens zugesprochen werden können (also um prognostizierte Eigenschaften wie voraussichtliche Mindestkeimfähigkeit oder Aufgangsgeschwindigkeit). Die Farbe der Gewebe (Schwarzfärbung) lässt am Ende des Keimungszeitraums Aussagen über einen möglichen Pilzbefall der Keimlinge zu.

Im Rahmen dieses Verfahrens werden computertomographische

Verfahren zur Bildgebung eingesetzt werden. Die Computertomographie und Magnetresonanztomographie erlauben eine zerstörungsfreie, dreidimensionale Keimpflanzen- oder Samenvermessung in einem Keimungssubstrat, das zur Untersuchung des Materials nicht entfernt zu werden braucht. Hierdurch kann eine vollständig störungs- und zerstörungsfreie Messung der Pflanzen erfolgen, ohne Einfluss auf die Keimung zu nehmen.

Mit besonderem Vorteil werden die Samen oder Keimpflanzen in den Strahlengang eines Röntgen- oder Magnetresonanztomographen geführt, dort im Strahlengang gedreht und ortsaufgelöst bildgebend tomographiert.

Ferner kann neben den vorgestellten tomographischen Verfahren auch eine optische Untersuchung vorteilhaft sein. Beispielsweise kann am Ende der Keimungsperiode bzw. eines entsprechenden Untersuchungszeitraums eine Beurteilung über einen oder mehrere bildgebende Sensoren wie beispielsweise eine Farbkamera, wobei beispielsweise die Hypokotylfarbe und eine möglicherweise erfolgte Farbveränderung durch Pilzinfektion festgestellt werden kann, oder über ein Magnetresonanzverfahren erfolgen.

Mit besonderem Vorteil werden die Pflanzensamen oder die sich hieraus entwickelnden Keimlinge unter kontrollierten Bedingungen in einer Keimungseinrichtung, beispielsweise einer Phytokammer, inkubiert. Vor der Untersuchung werden die Samen oder Keimlinge dann, vorzugsweise vollautomatisch, beispielsweise in den Magnetresonanztomographen geführt und anschließend wieder in die Keimungseinrichtung verbracht.

Wie erwähnt, können mit besonderem Vorteil durch die Verwendung computer- oder magnetresonanztomographischer Verfahren Pflanzensamen und/oder Keimlinge in einem frei wählbaren, nur an die jeweilige Untersuchungsmethodik anzupassenden Keimungssubstrat untersucht werden. Hierbei kann es sich beispielweise um die erwähnten Faltenfilter, um Erde oder ein anderes geeignetes Medium handeln. Durch diese Möglichkeit können unterschiedliche Aufwuchsbedingungen, beispielsweise unterschiedliche Bodenqualitäten, simuliert werden.

Mit besonderem Vorteil beinhaltet das Verfahren, Pflanzensamen im trockenen Zustand, angefeuchtete Pflanzensamen und/oder Keimlinge zu unterschiedlichen Zeitpunkten zu untersuchen. Beispielsweise können zunächst Gewebeteile trockener Samen durch die Untersuchung, Segmentierung und Ableitung der zeitpunktbezogenen anatomischen Merkmale analysiert werden. Hierzu werden die Samen z.B. zwischen Falten eines vertikal stehenden Faltenfilters positioniert und der Filter mit den Samen zunächst im trockenen Zustand in den Strahlengang des Röntgen- oder Magnetresonanztomographen geführt.

Der Faltenfilter wird nun definiert angefeuchtet und kontrollierten Keimungsbedingungen ausgesetzt. In gewissen Zeitabständen erfolgt während der Keimung eine (automatische) Tomographie mit anschließender Bildauswertung, wie zuvor dargestellt, wodurch neben den dreidimensionalen Bilddaten eine vierte Dimension, nämlich die zeitliche Entwicklung von Gewebeteilen, beschreibbar wird.

Als besonders vorteilhaft wird angesehen, durch das vorgestellte Verfahren als anatomische Einheiten der Pflanzensamen das harte Perikarp, das weiche Perikarp, den Embryo und/oder das Endospermgewebe zu erfassen, da diese anatomischen Strukturen besonders aussagekräftige Daten hinsichtlich einer Beurteilung von Keimungseigenschaften liefern. Erfindungsgemäß werden bei den Keimlingen die Keimwurzel, das Hypokotyl und/oder die Keimblätter betrachtet.

Die jeweiligen zeitpunktbezogenen anatomischen Merkmale umfassen ein Volumen, eine Fläche, eine Dimension (Länge, Breite) und/oder, falls durch das jeweilige bildgebende Verfahren feststellbar, optional eine Färbung der anatomischen Einheiten. Durch das Volumen des Endospermgewebes kann beispielsweise auf eine Nährstoffversorgung des Embryos und damit auf eine Keimungsqualität geschlossen werden. Das Volumen bzw. die Fläche der Keimblätter lässt hingegen beispielsweise Schlüsse auf die Assimilationsfähigkeit der sich entwickelnden Keimlinge zu. Länge und Kräftigkeit des Hypokotyls erlauben Aussagen über sein Streckungspotential. Je schneller die Keimblätter durch die Hypokotylstreckung beispielsweise verschlämmte Böden durchdringen und mit der Assimilation des Sonnenlichts beginnen können, desto früher und wirkungsvoller kann die Substanz- und damit die Ertragsbildung einsetzen. Die Wachstumsgeschwindigkeit, die Länge und die Verzweigung der Wurzel lässt Rückschlüsse auf die Wasserversorgung und die Bodenverankerung der Keimlinge zu.

Mit besonderem Vorteil kann, wie zuvor erläutert, durch das vorgestellte Verfahren eine Keimfähigkeit und/oder eine Keimqualität der Pflanzensamen, auch prospektiv, beurteilt werden. Das erfindungsgemäße Verfahren erlaubt es daher in besonders einfacher und vorteilhafter Weise, einen automatischen Keimtest zu etablieren, der geeignet ist, herkömmliche Testverfahren zu ersetzen, zu objektivieren und zu automatisieren.

Wie ebenfalls zuvor angegeben, beinhaltet das Beurteilen der Keimungseigenschaften das Erfassen der zeitpunktbezogenen anatomischen Merkmale über einen vorbestimmten Zeitraum, der beispielsweise mit als signifikant erkannten Zeitabschnitten eines Keimungszeitraumes korreliert.

Mit besonderem Vorteil umfasst das Beurteilen der Keimungseigenschaften das Vergleichen der zeitpunktbezogenen anatomischen Merkmale mit Vergleichs- und/oder Schwellwerten. Hierdurch ist es in besonders einfacher Weise möglich, jeweils beobachtete Merkmale mit Vergleichswerten zu korrelieren und größenordnungsmäßige Aussagen über die sich entwickelnden Keimlinge bzw. ihre Eigenschaften zu treffen. Der Vergleich mit Schwellwerten kann insbesondere auch zur Beurteilung von Saatgutpartien verwendet werden.

Um genauere Aussagen zu Keimungseigenschaften ableiten zu können, kann es von Vorteil sein, eine statistische Auswertung der zeitpunktbezogenen anatomischen Merkmale durchzuführen. Hierbei kann beispielsweise durch Mitteln einer größeren Anzahl Messungen unterschiedlicher Individuen (große Stichprobe) die biologische (intravarietale) Varianz innerhalb einer Art oder Behandlung eliminiert werden.

Das Verfahren kann auch beinhalten, eine Keimungsentwicklung mit Eigenschaften anatomischer Merkmale der trockenen Samen zu korrelieren. Beispielsweise ist es möglich, zeitliche Entwicklungstypen aller oder bestimmter Merkmale statistisch zu klassifizieren und dann den jeweiligen Samenmerkmalen zuzuordnen. Hierdurch wird es möglich, aus Samenmerkmalen eine Prognose hinsichtlich zu erwartender Keimungseigenschaften zu treffen und beispielsweise Samen im Rahmen der Produktion von Qualitätssaatgut vor- oder auszusortieren.

Vorteilhafterweise erlaubt es das erfindungsgemäße Verfahren, die Keimungseigenschaften unter Simulation von Stressfaktoren (Trockenheit, ungünstige Bodenbeschaffenheit) durchzuführen. Beispielsweise kann hierzu eine Änderung im Wassergehalt des Filterpapiers, das als Keimungssubstrat dient, eine Veränderung der Ablagetiefe der Samen im Filter und/oder eine mehr oder weniger starke Verdichtung der Filterfalten eines stehend gelagerten Filters oberhalb und unterhalb der Samen erfolgen. Aufgrund der automatischen Bildauswertung, der hierdurch abgeleiteten qualitativen Aussagen und der hierdurch bewirkten absoluten Standardisierbarkeit eignet sich das Verfahren auch zur objektiven Keimfähigkeits- und Triebkraftbeurteilung in offiziellen Saatgutprüfungen.

Eine Vorrichtung zur Beurteilung von Keimungseigenschaften von Pflanzensamen ist ebenfalls Gegenstand dieser Anmeldung. Zu Merkmalen und Vorteilen der Vorrichtung sei auf die zuvor erläuterten Merkmale des erfindungsgemäßen Verfahrens ausdrücklich hingewiesen.

Insbesondere weist eine derartige Vorrichtung Mittel zum Segmentieren und/oder Mittel zum Ableiten zeitpunktbezogener anatomischer Merkmale auf, die als Softwaremittel, insbesondere in Form von computerimplementierten Algorithmen, ausgeführt sind.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt einen Faltenfilter mit Keimlingen in einem Keimungstest gemäß dem Stand der Technik.
- Figur 2: zeigt schematisch eine Anordnung zur Durchführung des Verfahrens gemäß einer besonders bevorzugten Ausführungsform der Erfindung.
- Figur 3: zeigt Aufnahmen von Zuckerrübensaatgut mittels bildgebender Techniken.
- Figur 4: zeigt eine Teilschnittansicht einer 3D-Rekonstruktion eines Zuckerrübensamens aus computertomographischen Aufnahmen.
- Figur 5: zeigt computertomographische Aufnahmen von Zuckerrübensaatgut und Segmentdarstellungen, die durch Verfahren gemäß einer besonders bevorzugter Ausführungsform der Erfindung erhalten wurden.
- Figur 6: zeigt Volumendaten von segmentierten Geweben von Zuckerrübensaatgut, die durch ein Verfahren gemäß einer besonders bevorzugten Ausführungsform der Erfindung erhalten wurden.
- Figur 7: zeigt computertomographische Aufnahmen von Zuckerrübensaatgut gemäß einer besonders bevorzugten Ausführungsform der Erfindung und entsprechende Keimlinge.
- Figur 8: zeigt eine Korrelation eines gemäß einer besonders bevorzugten Ausführungsform der Erfindung erhaltenen Saatgutqualitätsindex mit einer Feldaufgangseigenschaft bei der Zuckerrübe.
- Figur 9: zeigt einen Keimungstest in einem stehenden Faltenfilter gemäß einer besonders bevorzugten Ausführungsform der Erfindung.
- Figur 10: zeigt computertomographische Aufnahmen ungekeimten Zuckerrübensaatguts gemäß einer besonders bevorzugten Ausführungsform der Erfindung.
- Figur 11: zeigt 3D-Rekonstruktionen gekeimten Zuckerrübensaatguts gemäß einer besonders bevorzugten Ausführungsform der Erfindung.
- Figur 12: zeigt 3D-Rekonstruktionen gekeimten Weizensaatguts gemäß einer besonders bevorzugten Ausführungsform der Erfindung.
- Figur 13: zeigt 3D-Rekonstruktionen gekeimten Maissaatguts gemäß einer besonders bevorzugten Ausführungsform der Erfindung.
- Figur 14: zeigt eine schematische Darstellung einer Anordnung zur Durchführung eines Verfahrens gemäß einer besonders bevorzugten Ausführungsform der Erfindung.

In den nachfolgenden Figuren sind gleiche oder analoge Elemente, wie beispielsweise Samen- oder Keimlingsmerkmale, mit gleichen Bezugszeichen angegeben und werden der Übersichtlichkeit halber nicht jeweils erneut erläutert.

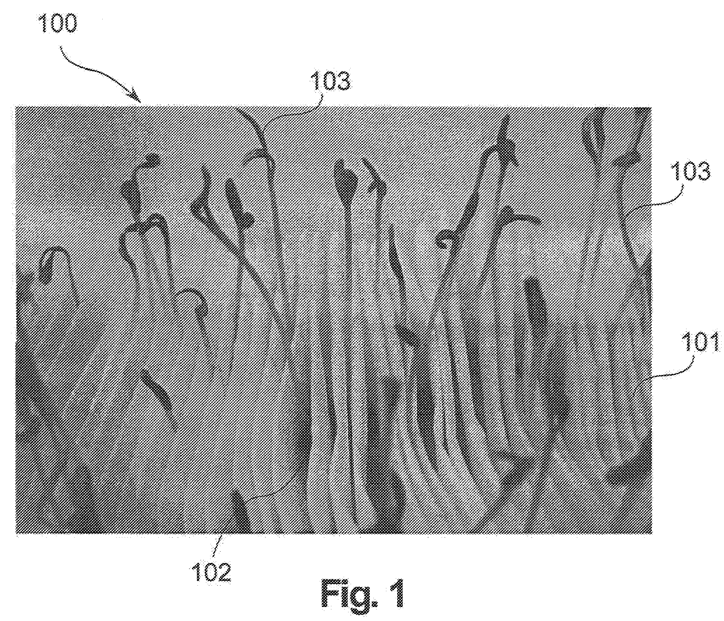

In Figur 1 ist ein Faltenfilter mit Keimlingen dargestellt, wie er in einem Keimungstest gemäß dem Stand der Technik verwendet wird. Die Anordnung ist insgesamt mit 100 bezeichnet. Wie zuvor erläutert, wird in herkömmlichen Keimungstests in einen horizontal angeordneten Faltenfilter 101 Saatgut 102 eingebracht und nach Flüssigkeitszugabe unter weitgehend definierten Bedingungen angekeimt. Die sich hieraus entwickelnden Keimlinge 103 werden anschließend beurteilt, beispielsweise ausgezählt.

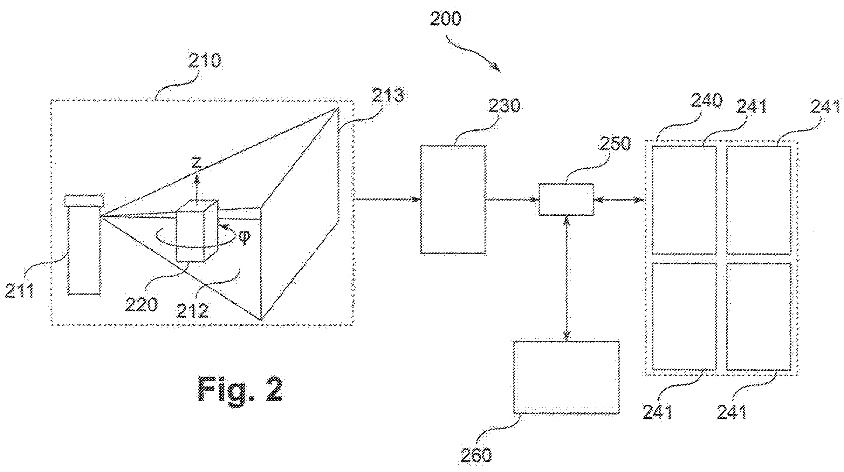

In Figur 2 ist eine Anordnung zur Durchführung des Verfahrens gemäß einer besonders bevorzugten Ausführungsform der Erfindung schematisch dargestellt und insgesamt mit 200 bezeichnet. Die Anordnung 200 weist eine Röntgeneinrichtung 210, beispielsweise einen Computertomographen 210, mit einer Röntgenröhre 211 und einem Röntgendetektor 213 auf. In den Strahlengang 212 der Röntgeneinrichtung 210 wird eine zu untersuchende Probe, beispielsweise ein Filter mit Samen in einer Halterungseinrichtung oder Keimlinge in Substrat, eingebracht. Die Probe wird in der Röntgeneinrichtung 210 zur Aufnahme von Schnittbildern, wie mit einem Rotationspfeil ϕ veranschaulicht, gedreht, und schrittweise in z-Richtung verschoben.

Die gewonnenen Schnittbilder werden beispielsweise durch einen Messrechner 230 vorverarbeitet. Durch eine schnelle Recheneinrichtung 240, beispielsweise ein Cluster aus Einzelrechnern 241, werden die von Messrechner 230 über ein schnelles Netzwerk 250 bereitgestellten Messdaten rekonstruiert und an einen Auswerte- oder Visualisierungsrechner 260 bereitgestellt.

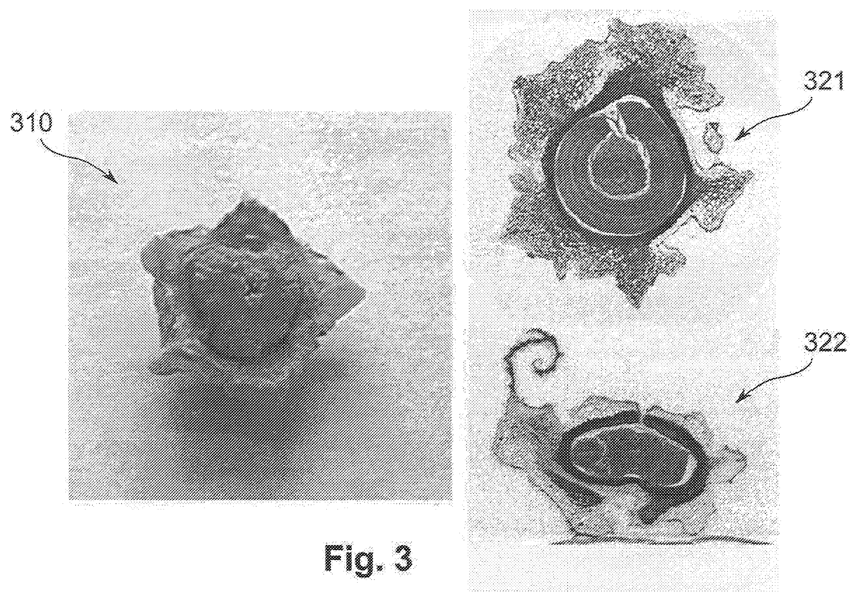

In Figur 3 sind Aufnahmen von Zuckerrübensaatgut mittels bildgebender Techniken dargestellt. Abbildung 310 zeigt eine herkömmliche Digitalfotografie eines Zuckerrübensamens oder -knäuels. In Abbildung 321 ist eine computertomographische Querschnittsansicht des Zuckerrübensamens dargestellt, wobei die Richtung der Schnittebene in etwa jener der Abbildungsebene der Abbildung 310 entspricht. Die entsprechend senkrecht dazu aufgenommene computertomographische Längsansicht ist in Abbildung 322 dargestellt.

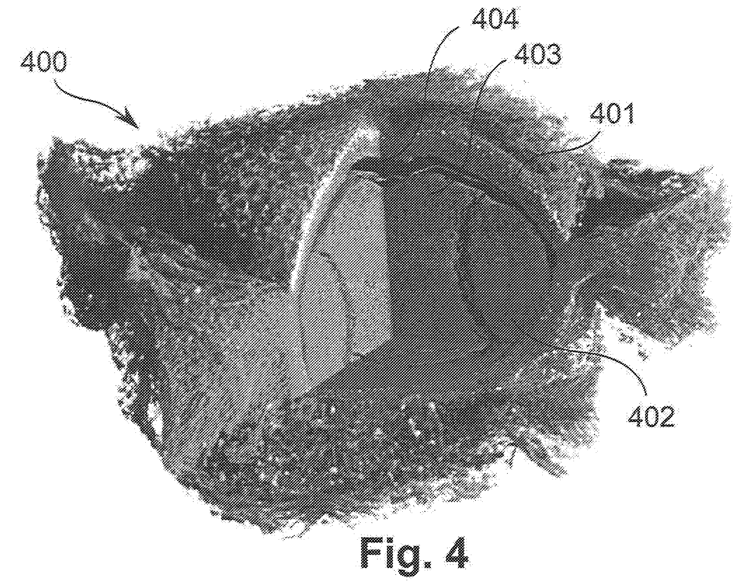

Figur 4 zeigt eine Teilschnittdarstellung einer 3D-Rekonstruktion 400 eines Zuckerrübensamens aus computertomographischen Aufnahmen wie jenen der Figur 3. In der Darstellung 400 sind die Samenschale 401, die Keimblattanlagen 402, das Endospermgewebe 403 sowie ein Hohlraum 404 im Samen optisch differenzierbar.

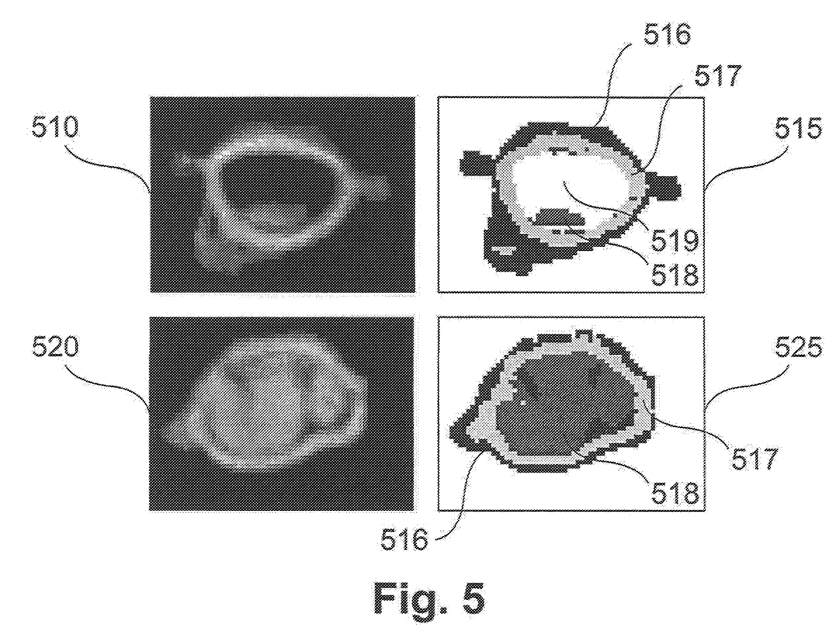

Wie zuvor erläutert, beinhaltet das erfindungsgemäße Verfahren eine Zuordnung von Keimlingsmerkmalen zu anatomischen Einheiten durch automatische Segmentierung. Die automatische Segmentierung ist in Figur 5 veranschaulicht. Im linken Teil der Figur 5 sind dabei zwei computertomographischen Schnittaufnahmen 510, 520 eines Zuckerrübensamens in Form niedrig aufgelöster Aufnahmen dargestellt. Im rechten Teil der Figur sind hieraus mittels Software automatisch erzeugte Segmentdarstellungen 515, 525 abgebildet. Die Segmentdarstellungen 515 und 525 zeigen drei bzw. vier Segmente bzw. Bildbereiche 516-519, die beispielsweise unterschiedlichen anatomischen Einheiten, wie den Merkmalen 401 bis 404 der Figur 4, entsprechen können. Die Bestimmung der Segmente 516-519 aus den Schnittaufnahmen 510 erfolgt teilweise unter Verwendung von Grauwerten, zusätzlich jedoch insbesondere mittels einer Korrelation von Einzelbilddaten mit Serienaufnahmen von Schnittbildern und unter Einbeziehung empirisch an Messreihen ermittelter Beziehungen.

Bei dem in Abbildung 510 und 515 dargestellten Samen ist beispielsweise ein Hohlraum 519 zu erkennen und durch die Segmentierung entsprechend zugeordnet worden, der in dem in den Abbildungen 520 und 525 dargestellten Samen nicht vorhanden ist. Das Vorliegen eines Hohlraums innerhalb eines Samens und dessen Größe kann beispielsweise als ein Qualitätsmerkmal zu einer Beurteilung von Saatguteigenschaften verwendet werden.

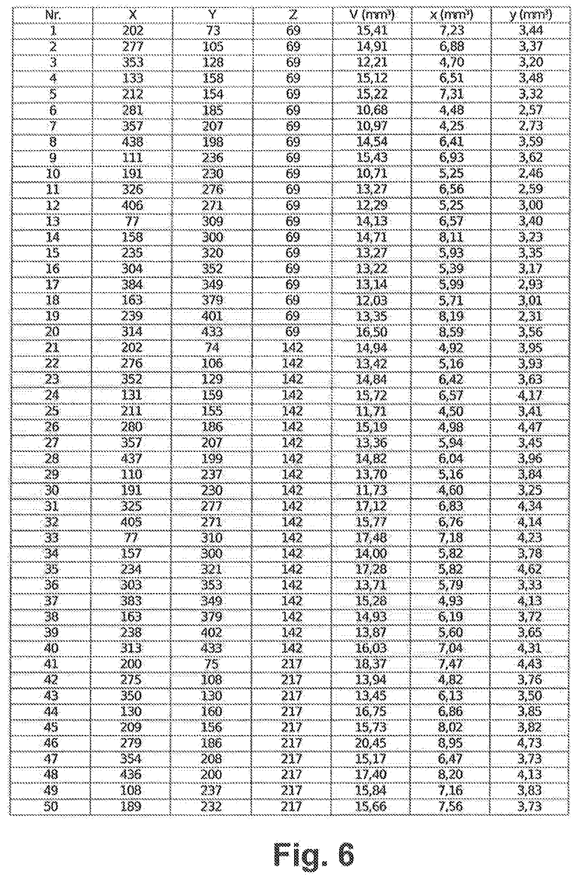

In Figur 6 sind Beispieldaten dargestellt, die aus 50 aufeinanderfolgenden computertomographischen Aufnahmen von Zuckerrübensaatgut erhalten wurden. Die jeweiligen Koordinaten der computertomographischen Messung (X- und Y-Position sowie Versatz in Z-Richtung) sind dabei in den Spalten X, Y und Z angegeben. Ferner sind in der Tabelle ein Gesamtsamenvolumen V in mm³ sowie ein Volumen eines ersten segmentierten Merkmals x und eines zweiten segmentierten Merkmals y in mm³ angegeben.

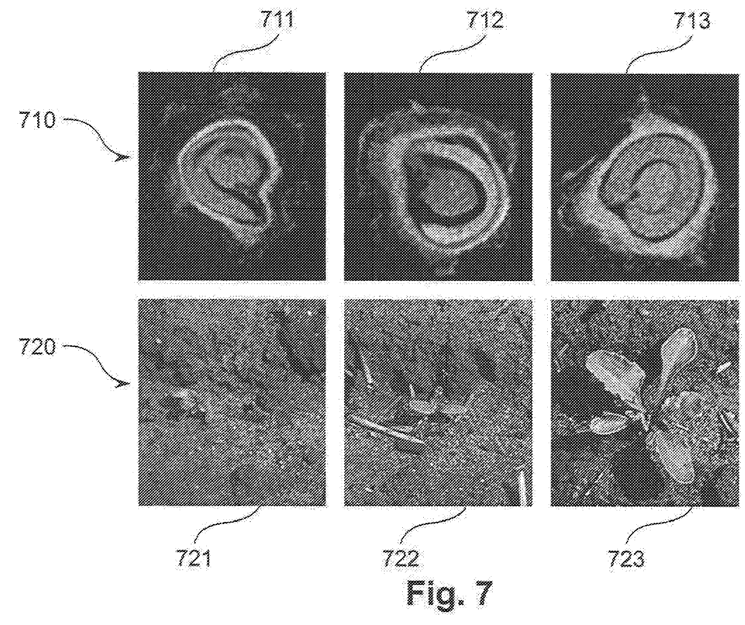

In Figur 7 ist eine Beziehung zwischen messbaren Saatguteigenschaften und einer sich hieraus ergebenden Pflanzenqualität dargestellt. 710 der Figur 7 zeigt dabei drei computertomographische Aufnahmen 711, 712 und 713 von drei Samen, die einem erfindungsgemäßen Segmentierungs- und Zuordnungsverfahren unterworfen wurden.

Im Rahmen des in Figur 7 dargestellten Beispiels wurde dabei jeweils ein Gesamtsamenvolumen und ein Hohlraum innerhalb eines Samens (beispielsweise entsprechend Hohlraum 404 der Figur 4 bzw. Hohlraum 519 der Figur 5) automatisch ermittelt. Die Werte für die einzelnen Samen 711, 712 und 713 sind (in mm³) in der nachfolgenden Tabelle angegeben:

| **Merkmal** | **711** | **712** | **713** |
|---|---|---|---|
| Samenvolumen | 2,80 | 3,52 | 4,19 |
| Hohlraum | 0,51 | 1,42 | 0,19 |

In Zeile 720 der Figur 7 sind den Samen jeweils entsprechende Keimlinge 721, 722 und 723 dargestellt. Es ist klar ersichtlich, dass die Keimlinge 721 und 722 eine deutlich schlechtere Wuchsleistung zeigen als der Same 713 entsprechende Keimling 723. Die unterschiedlichen Pflanzenqualitäten sind sowohl auf einen unterschiedlich frühen Feldaufgang als auch auf unterschiedliche Ausgangsgrößen des embryonalen Gewebes zurückzuführen. Es konnte festgestellt werden, dass insbesondere die Größe eines Hohlraums innerhalb eines Samens eine deutliche Korrelation mit einer sich ergebenden Pflanzenqualität zeigt. Bei Same 713, bei dem dieser Hohlraum, beispielsweise im Vergleich zu Samen 712 minimal ist, konnte ein besonders früher Feldaufgang und damit eine besonders gute Qualität des Keimlings 723 korreliert werden.

Durch die erfindungsgemäß ermittelten Samen- bzw. Keimlingsmerkmale, darunter beispielsweise ein Hohlraum innerhalb eines Samens, kann ein aus mehreren Parametern ermittelter Saatgutqualitätsindex erstellt werden. Dieser Saatgutqualitätsindex erlaubt es beispielsweise, Vorhersagen zum Feldaufgangsverhalten entsprechender Samen zu treffen.

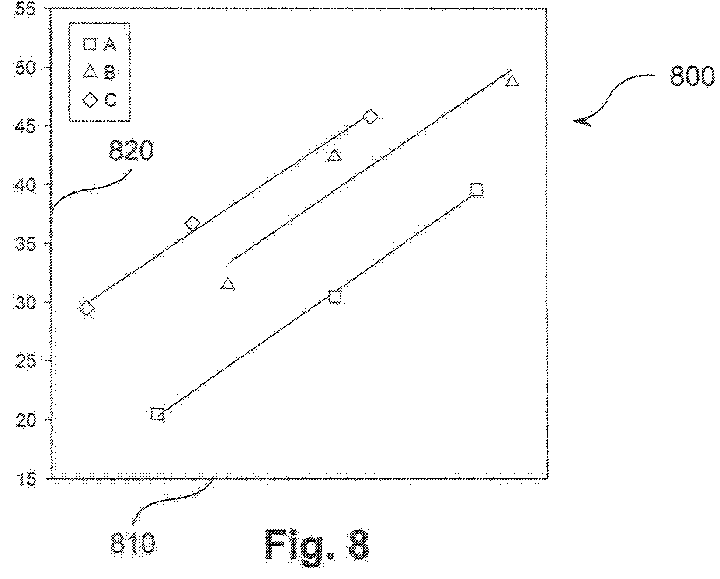

Dieser Sachverhalt ist in Figur 8 dargestellt. Figur 8 zeigt ein Diagramm 800, in dem ein entsprechend ermittelter Saatgutqualitätsindex von Saatgutpartien verschiedener Sorten auf der x-Achse 810 gegen den Anteil früh gekeimter (erwünschter) Pflanzen auf der y-Achse 820 in Prozentanteilen aufgetragen ist. Graph 800 zeigt damit eine Beziehung zwischen der durch einen Qualitätsindex beschriebenen Qualität des Saatgutes und dem frühen Feldaufgang. Die Daten stellen Mittelwerte von drei Standorten dar, wobei jeweils Samen einer Provenienz bzw. Genetik A, einer Genetik B und einer Genetik C untersucht wurden. Innerhalb der einzelnen Genetiken ist eine deutliche Korrelation des Saatgutqualitätsindex mit dem frühen Feldaufgang erkennbar.

Dem Fachmann ist bekannt, dass die Feldaufgangseigenschaften von Zuckerrübensaatgut mit den später erzielten Rübengrößen korrelieren. Ein Keimling bzw. Same mit frühem bzw. schnellem Feldaufgang verfügt, wie oben erläutert, über einen besonders raschen Zugang zur Wasser- und/oder Nährsalzen und vermag durch eine frühzeitig hinreichend entwickelte Blattfläche die Assimilationstätigkeit mit voller Effizienz aufzunehmen.

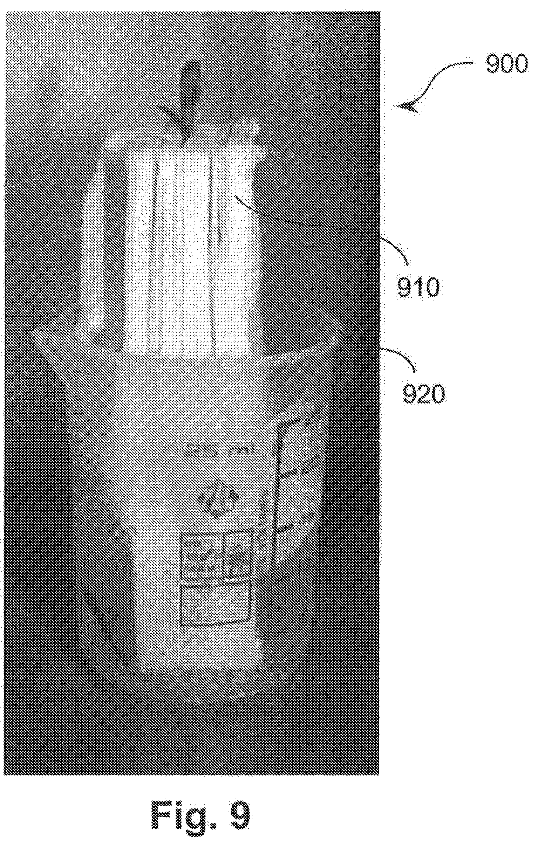

In Figur 9 ist ein erfindungsgemäß vorgeschlagener Keimtest in einem stehendem Faltenfilter, wie zuvor erläutert, dargestellt. Die Anordnung ist insgesamt mit 900 bezeichnet.

In einen stehenden Faltenfilter 910 wird dabei ein Same eingebracht und in einem Feuchtigkeitsreservoir 920 stehend zur Keimung gebracht. Durch Komprimierung des Faltenfilters und/oder unterschiedliche Feuchtigkeitsversorgung können dabei unterschiedliche Stressverhältnisse simuliert werden. Während der Keimung des Samens erfolgt wiederholt eine computertomographische Untersuchung zum Erhalt zeitbezogener Untersuchungsdaten, die anschließend einem zuvor erläuterten Auswertungsverfahren unterworfen werden können.

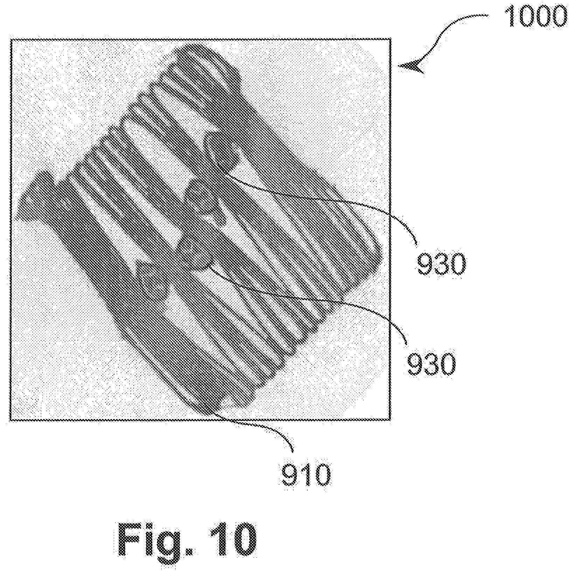

Figur 10 zeigt ein in diesem Zusammenhang erhaltenes computertomographisches Schnittbild eines Faltenfilters 910 mit darin eingebrachten, trockenen Samen 930. Wie zuvor erläutert erfolgt auch im Rahmen dieses Keimlingstests eine schichtweise Aufnahme, wodurch rekonstruierte dreidimensionale Daten erhalten werden können.

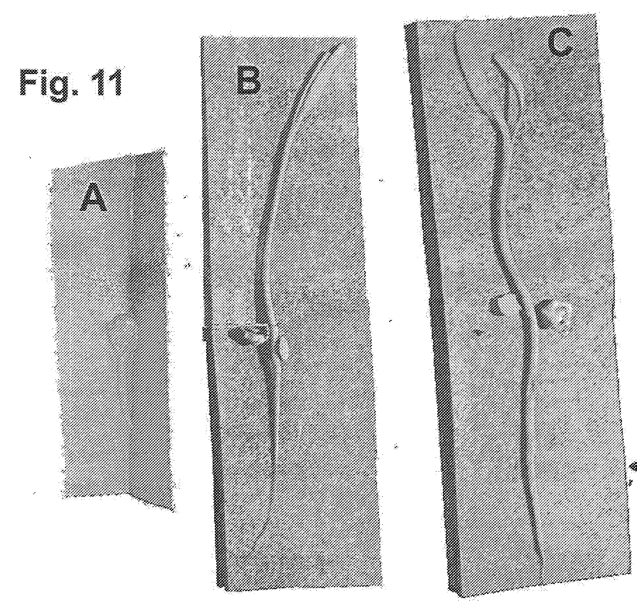

In den Figuren 11, 12 und 13 sind hierzu jeweils entsprechende 3D-Rekonstruktionen dargestellt, die zur störungsund zerstörungsfreien Beurteilung von Keimungseigenschaften verwendet werden können.

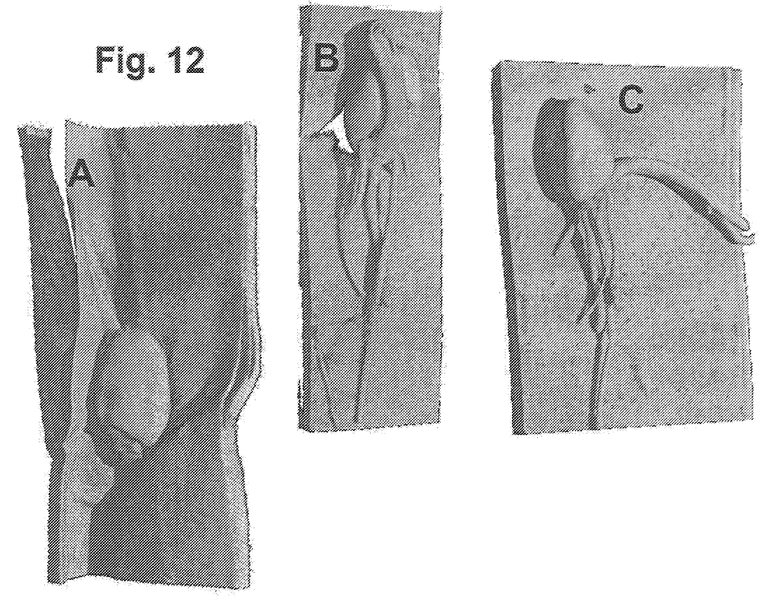

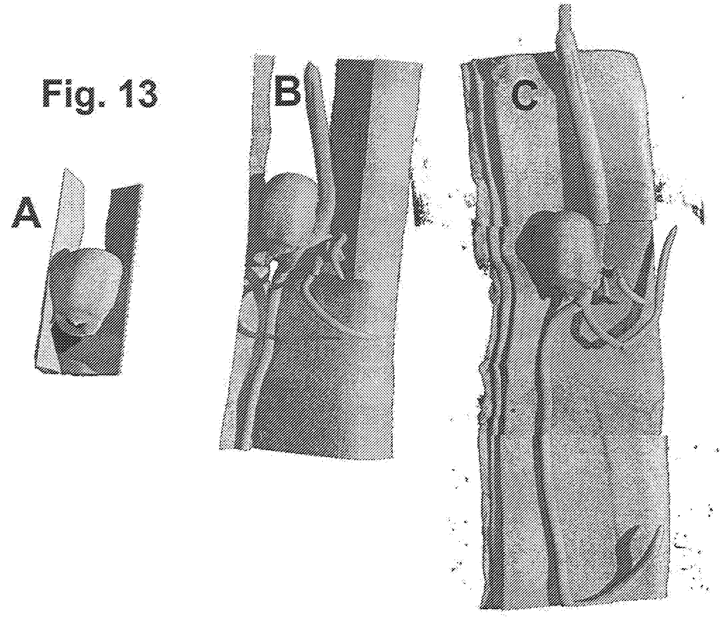

Hierbei bezeichnen die Teilfiguren A der Figuren 11, 12 und 13 jeweils Aufnahmen, die drei Tage nach Keimlingsbeginn erhalten wurden, die Teilfiguren B bezeichnen Aufnahmen, die nach sechs Tagen erhalten wurden und in den Teilfiguren C sind sieben Tage alte Keimlinge dargestellt. Figur 11 zeigt Mais-, Figur 12 Zuckerrüben- und Figur 13 Weizenkeimlinge. Wie bereits zuvor festgestellt, eignet sich das vorgeschlagene Verfahren also zur Untersuchung einer großen Bandbreite landwirtschaftlich und wissenschaftlich relevanter Pflanzenarten und -sorten.

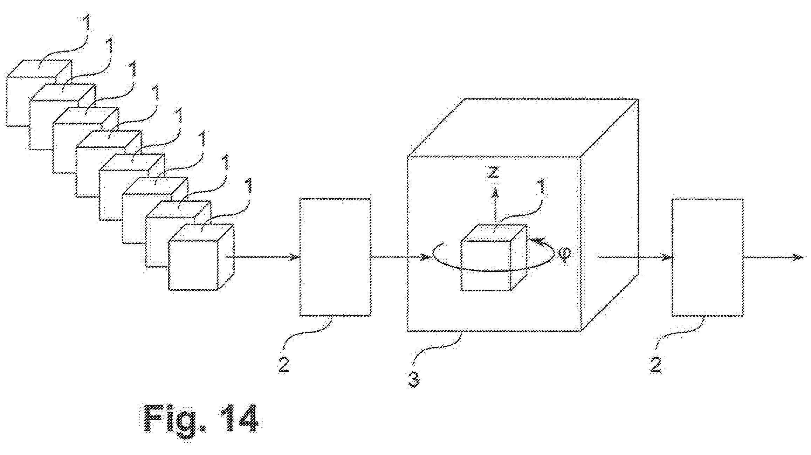

In Figur 14 ist ein schematischer Aufbau einer Vorrichtung zur Einkeimung und tomographischen Inspektion von Samen und hieraus gekeimten Keimlingen in einem dichten Medium, zum Beispiel in Filterpapier wie in Figur 9 bis 13 veranschaulicht, dargestellt. Die Vorrichtung kann insbesondere zur automatisierten Beurteilung von Keimlingen verwendet werde.

Mit 1 sind jeweils Keimbehältnisse mit in Filterpapier, Erde oder dergleichen eingekeimten Samen bezeichnet. Die Keimbehältnisse 1 werden über einen Transport- und Verschiebemechanismus 2 in ein Tomographiesystem 3 zur zerstörungsfreien 3D-Inspektion der geschlossenen Medien verbracht und dort ortsaufgelöst tomographiert. Nach der Untersuchung werden die Keimbehältnisse 1 erneut durch den Transport- und Verschiebemechanismus 2 weiter befördert, beispielsweise erneut in den Keimraum verbracht.

## Patentansprüche

1. Verfahren zur automatisierten, objektiven Beurteilung von Keimungseigenschaften von Pflanzensamen und von sich aus den Pflanzensamen entwickelnden Keimlingen, bei dem sich die Pflanzensamen und Keimlinge in einem dichten Medium als Keimungssubstrat, insbesondere Filterpapier (910) oder Erde, befinden, auf Grundlage zeitpunktbezogener anatomischer Merkmale (x, y), wobei diese zeitpunktbezogenen anatomischen Merkmale (x, y) in zeitlich gestaffelter Abfolge während des Keimungsverlaufs jeweils durch Ausführen der Schritte a) bis c) ermittelt werden:
a) Untersuchen der Pflanzensamen und Keimlinge unter Verwendung wenigstens eines bildgebenden computertomographischen Verfahrens und Erhalt dreidimensionaler, zeitpunktbezogener Untersuchungsdaten (400),
b) Segmentieren der zeitpunktbezogenen Untersuchungsdaten (400), wobei die jeweils abgebildeten Pflanzensamen und/oder Keimlinge von dem Keimungssubstrat segmentiert werden, und Zuordnen von erhaltenen Segmenten (516 - 519) zu anatomischen Einheiten der Pflanzensamen und/oder Keimlinge, und
c) Bestimmen der zeitpunktbezogenen anatomischen Merkmale (x, y) in Form eines Volumens, einer Fläche und/oder einer Dimension der anatomischen Einheiten der Pflanzensamen und Keimlinge aus den zugeordneten Segmenten (516 - 519), wobei die anatomischen Merkmale wenigstens einer der anatomischen Einheiten Keimwurzel, Hypokotyl und Keimblätter der Keimlinge bestimmt werden.

2. Verfahren nach Anspruch 1, bei dem Pflanzensamen im trockenen Zustand, angefeuchtete Pflanzensamen und Keimlinge zu unterschiedlichen Untersuchungszeitpunkten untersucht werden.

3. Verfahren nach Anspruch 1 oder 2, bei dem zeitpunktbezogene anatomische Merkmale wenigstens des harten Perikarps, des weichen Perikarps, des Embryos und/oder des Endosperms der Pflanzensamen bestimmt werden.

4. Verfahren nach einem der vorstehenden Ansprüche, bei dem als Keimungseigenschaften eine Keimfähigkeit und/oder eine Keimqualität der Pflanzensamen beurteilt werden.

5. Verfahren nach einem der vorstehenden Ansprüche, bei dem das Beurteilen der Keimungseigenschaften das Erfassen der zeitpunktbezogenen anatomischen Merkmale über einen vorbestimmten Zeitabschnitt beinhaltet.

6. Verfahren nach einem der vorstehenden Ansprüche, bei dem das Beurteilen der Keimungseigenschaften das Vergleichen der zeitpunktbezogenen anatomischen Merkmale mit Vergleichs- und/oder Schwellwerten und/oder das statistische Auswerten der zeitpunktbezogenen anatomischen Merkmale beinhaltet.

7. Verfahren nach einem der vorstehenden Ansprüche, bei dem das Beurteilen der Keimungseigenschaften das Korrelieren zeitpunktbezogener anatomischer Merkmale von Keimlingen mit zeitpunktbezogenen anatomischen Merkmalen von Pflanzensamen beinhaltet.

8. Verfahren nach einem der vorstehenden Ansprüche, bei dem das Beurteilen der Keimungseigenschaften unter Simulation von Stressfaktoren erfolgt.

9. Verfahren nach einem der vorstehenden Ansprüche, bei dem die Pflanzensamen oder Keimlinge in einem geschlossenen Keimbehältnis vor der Untersuchung einer Keimungseinrichtung entnommen und/oder danach wieder in eine Keimungseinrichtung überführt werden.

## Claims

1. Method for the automatic objective evaluation of germination properties of plant seeds and of seedlings developing from the plant seeds, wherein the plant seeds and seedlings are located in a dense medium as a germination substrate, particularly filter paper (910) or soil, on the basis of anatomical features (x, y) relating to a particular point in time, said anatomical features (x, y) relating to a particular point in time being determined in a staggered time sequence during the course of germination by performing steps a) to c) at a time:
a) examining the plant seeds and seedlings using at least one imaging computer tomographic method and obtaining three-dimensional examination data (400) relating to a particular point in time,
b) segmenting the three-dimensional examination data (400) relating to a particular point in time, the plant seeds and/or seedlings imaged being segmented from the germination substrate, and allocating of segments obtained (516-519) to anatomical units of the plant seeds and/or seedlings, and
c) determining the anatomical features (x, y) relating to a particular point in time, in the form of a volume, an area and/or a dimension of the anatomical units of the plant seeds and seedlings from the allocated segments (516-519), the anatomical features of at least one of the anatomical units of radicle, hypocotyl and cotyledons of the seedlings being determined.

2. Method according to claim 1, wherein plant seeds in the dry state, moistened plant seeds and seedlings are examined at different examination times.

3. Method according to claim 1 or 2, wherein anatomical features relating to a particular point in time of at least the hard pericarp, the soft pericarp, the embryo and/or the endosperm of the plant seeds are determined.

4. Method according to any one of the preceding claims, wherein a germination capacity and/or germination quality of the plant seeds are evaluated as germination properties.

5. Method according to any one of the preceding claims, wherein the evaluation of the germination properties includes detecting the anatomical features relating to a particular point in time over a predetermined period of time.

6. Method according to any one of the preceding claims, wherein the evaluation of the germination properties includes comparing the anatomical features relating to a particular point in time with comparative and/or threshold values and/or statistically evaluating the anatomical features relating to a particular point in time.

7. Method according to any one of the preceding claims, wherein the evaluation of the germination properties includes the correlation of anatomical features of seedlings relating to a particular point in time with anatomical features of plant seeds at a particular point in time.

8. Method according to any one of the preceding claims, wherein the evaluation of the germination properties takes place while simulating stress factors.

9. Method according to any one of the preceding claims, wherein the plant seeds or seedlings in an enclosed germination container are taken from a germination device before examination and/or returned to a germination device subsequently.

## Revendications

1. Procédé pour l'évaluation objective automatique de propriétés de germination de semences de plante et de plants se développant à partir des semences de plante, dans lequel les semences de plante et les plants sont localisés dans un milieu dense sous forme d'un substrat de germination, particulièrement du papier filtre (910) ou de la terre, sur la base de caractéristiques anatomiques (x, y) concernant un instant particulier, lesdites caractéristiques anatomiques (x, y) concernant un instant particulier étant déterminées dans une séquence temporelle échelonnée au cours de la germination en exécutant à un moment les étapes a) à c) consistant à:
a) examiner les semences de plante et les plants en utilisant au moins un procédé tomographique informatique d'imagerie et obtenir des données d'examen en 3 dimensions (400) concernant un instant particulier,
b) segmenter les données d'examen en 3 dimensions (400) concernant un instant particulier, les semences de plante et/ou les plants imagés étant segmentés à partir du substrat de germination, et attribuer des segments obtenus (516 - 519) à des unités anatomiques des semences de plante et/ou des plants, et
c) déterminer les caractéristiques anatomiques (x, y) concernant un instant particulier, sous la forme d'un volume, d'une zone et/ou d'une dimension des unités anatomiques des semences de plante et des plants à partir des segments attribués (516 - 519), les caractéristiques anatomiques d'au moins l'une des unités anatomiques de radicule, d'hypocotyle, et de cotylédons des plants étant déterminées.

2. Procédé selon la revendication 1, dans lequel les semences de plante dans l'état sec, les semences de plante humidifiées et les plants sont examinés à différents moments d'examen.

3. Procédé selon la revendication 1 ou 2, dans lequel des caractéristiques anatomiques concernant un instant particulier d'au moins le péricarpe dur, le péricarpe mou, l'embryon et/ou l'endosperme des semences de plante sont déterminées.

4. Procédé selon l'une quelconque des revendications précédentes, dans lequel une capacité de germination et/ou une qualité de germination des semences de plante sont évaluées en tant que propriétés de germination.

5. Procédé selon l'une quelconque des revendications précédentes, dans lequel l'évaluation des propriétés de germination comprend de détecter les caractéristiques anatomiques concernant un instant particulier sur une période de temps prédéterminée.

6. Procédé selon l'une quelconque des revendications précédentes, dans lequel l'évaluation des propriétés de germination comprend de comparer les caractéristiques anatomiques concernant un instant particulier à des valeurs comparatives et/ou de seuil et/ou d'évaluer statistiquement les caractéristiques anatomiques concernant un instant particulier.

7. Procédé selon l'une quelconque des revendications précédentes, dans lequel l'évaluation des propriétés de germination comprend la corrélation de caractéristiques anatomiques de plant concernant un instant particulier avec des caractéristiques anatomiques de semences de plante à un instant particulier.

8. Procédé selon l'une quelconque des revendications précédentes, dans lequel l'évaluation des propriétés de germination se produit lors de la simulation de facteurs de stress.

9. Procédé selon l'une quelconque des revendications précédentes, dans lequel les semences de plante ou les plants dans un récipient de germination clos sont extraits d'un dispositif de germination avant l'examen et/ou renvoyés vers un dispositif de germination par la suite.
